# FASCICULE DE BREVET EUROPEEN

(11) **EP 0 743 124 B1**
(45) Date de publication et mention de la délivrance du brevet: **18.08.1999**
(21) Numéro de dépôt: 96440038.6
(22) Date de dépôt: 09.05.1996
(51) Int. Cl.: B23K 1/00, B21D 39/04, B21D 53/86

(54) **Procédé d'assemblage d'une structure en profilé tubulaire, plus particulièrement d'un cadre de bicyclette ou analogue**
Verfahren zum Zusammenbauen einer Rohrprofilstruktur, insbesondere eines Fahrradrahmens oder ähnlichen
Process for assembling a tubular structure, particularly a bicycle frame or the like

(30) Priorité: 16.05.1995 FR 9506020
(43) Date de publication de la demande: 20.11.1996
(73) Titulaire: AML MICROTECHNIQUE LORRAINE Société Anonyme, 57159 Marange-Silvange (FR); CYCLOR Société Anonyme, 94130 Nogent-sur-Marne (FR)
(72) Inventeur: Limbach, Fabrice, 57159 Marange-Silvance (FR)
(74) Mandataire: Rhein, Alain

(56) Documents cités:
- EP-A- 0 168 653
- EP-A- 0 277 891
- FR-A- 2 245 520
- US-A- 2 723 448
- US-A- 3 497 245
- PATENT ABSTRACTS OF JAPAN vol. 8, no. 22 (M-272), 31 Janvier 1984 & JP-A-58 181442 (SUMITOMO KEIKINZOKU KOGYO KK), 24 Octobre 1983,

## Description

L'invention concerne un procédé d'assemblage d'une structure en profilés tubulaires, plus particulièrement d'un cadre de bicyclette ou analogues, lesdits profilés tubulaires étant du type métallique, notamment en alliage d'aluminium ou similaire. Elle concerne, en outre, un cadre pour bicyclette ou analogue issu de ce procédé.

En fait, l'on connaît déjà bon nombre de procédés tout particulièrement adaptés pour l'assemblage d'un cadre de bicyclettes. Ces procédés font appel, habituellement, à des techniques de soudure ou de brasage ou encore de collage, techniques bien qu'étant parfaitement maîtrisées, ont toutes leurs inconvénients.

Ainsi, les procédés d'assemblage par soudure ou brasage, lorsqu'ils sont plus particulièrement appliqués pour l'assemblage d'un cadre constitué de profilés tubulaires en métal léger non ferreux, par exemple, à base d'aluminium, sont d'exécution délicate sans compter que l'échauffement local qu'ils engendrent conduit à des modifications des caractéristiques mécaniques de l'alliage. Aussi, de manière systématique, un cadre de bicyclette réalisé selon de tels procédés fatigue rapidement à hauteur des jonctions des profilés tubulaires, allant jusqu'à la rupture d'un profilé tubulaire à proximité immédiate d'une soudure.

Ces procédés habituels d'assemblage par soudure ou brasage sont, en outre, d'exécution longue et ne peuvent être réalisés que par une main-d'oeuvre hautement qualifiée. De plus, il est indispensable, dans de nombreux cas, de procéder à une opération d'ébavurages et moulages afin d'éliminer coulures et irrégularités en vue d'un résultat soigné. Il est évident qu'il en découle un coût de revient élevé.

A priori, les procédés d'assemblage par collage répondent au problème précité. En fait, cela n'est vrai que partiellement dans la mesure où le collage n'est envisageable que si, à hauteur des jonctions des profilés tubulaires, il y a emboîtement possible de ces derniers au travers de raccords appropriés. A ce propos, les documents FR-A-2.245.520 et FR-A-2.318.333 décrivent de tels raccords autorisant l'assemblage d'éléments de cadres de cycles par collage. Ainsi, l'on dispose de raccords de tige de selle , de raccords de pédaliers, de raccords de tube de guidon et de raccords de tête de fourche. Or, ces raccords, assurant la jonction d'au moins deux profilés tubulaires s'étendant dans des directions différentes, sont nécessairement exécutés, soit par mécano-soudure, soit par fonderie, sur des lignes de fabrication parallèles, de sorte qu'ils représentent une part non négligeable dans le coût de revient du cadre de cycle définitivement obtenu.

De plus, les colles employées présentent, nécessairement, des performances de haut niveau. Elles sont donc onéreuses, sans compter que leur durcissement, par polymérisation, nécessite un certain temps pendant lequel il est nécessaire de maintenir, solidement, les pièces assemblées en évitant tout déplacement relatif entre elles. A ce propos, dans le cadre du document n° 2.318.333, il a été imaginé des raccords qui tentent d'éviter ces mouvements relatifs des pièces assemblées pendant l'opération de polymérisation de la colle.

Finalement, en tenant compte des impératifs qui précédent, l'on constate que les procédés d'assemblage par collage, s'ils sont, à priori, attractifs en raison des avantages qu'ils procurent par rapport aux procédés d'assemblage par soudure ou brasage, n'en sont pas moins contraignants à tel point qu'ils engendrent, souvent, un coût de revient supérieur.

Il est encore connu, notamment par le document EP-A-0 168 653 un procédé d'assemblage de tubes, notamment en aluminium par la technique de soudure au bain de sel. Ce procédé consiste à raccorder, sur un tube principal, un autre tube, par exemple une conduite d'alimentation ou d'évacuation de fluide frigorifique. Pour cela il est ménagé dans le tube principal un orifice de communication, tandis que le tube secondaire est, tout d'abord, expansé à son extrémité de manière à présenter un diamètre interne sensiblement égal au diamètre externe du tube principal. Dans cette extrémité du tube secondaire est, ensuite, réalisée une découpe lui donnant l'apparence d'une fourche à deux branches susceptible d'être engagée sur le tube principal avant d'être conformé au pourtour externe de ce dernier. En dernier lieu on procède à leur assemblage étanche plus particulièrement par soudure au bain de sel.

En fin de compte, l'on observe que pour préassembler les tubes à souder ceux-ci nécessitent de multiples usinages qui représentent une perte de temps et bien sûr une augmentation substantielle du coût de fabrication. De plus, l'on ne peut raisonnablement envisager d'assembler les tubes d'un cadre de bicyclette selon la technique présentée dans ce document antérieur.

De même, il est décrit, dans le document US-A-2.723.448 un procédé de soudure au bain de sel d'éléments en aluminium sans faire référence aux difficultés même de maintenir les pièces assemblées en cours de soudure.

La présente invention se propose de répondre à l'ensemble des inconvénients précités, ceci au travers d'un procédé d'assemblage particulièrement efficace, tant du point de vue des avantages mécaniques qui en découlent que du coût de revient qu'il engendre pour sa mise en oeuvre. Il est encore une particularité du procédé selon l'invention qui consiste en ce que la préparation des pièces, avant assemblage est particulièrement simplifiée permettant, là encore, de réduire le coût de revient d'un cadre d'une bicyclette.

A cet effet, l'invention concerne un procédé d'assemblage d'une structure en profilés tubulaires, plus particulièrement d'un cadre de bicyclette ou analogue, lesdits profilés tubulaires étant du type métallique, notamment en alliage d'aluminium ou similaire, consistant d'une part, à préassembler tout ou partie de ladite structure de sorte que les profilés tubulaires soient maintenus en contact à hauteur de leur zone de jonction au niveau de laquelle l'on assure la présence d'un métal d'apport et, d'autre part, à tremper ladite structure dans un bain de sel en température, pour assurer la fusion du métal d'apport et la liaison entre lesdits profilés tubulaires préassemblés, caractérisé par le fait que :
- pour préassembler deux profilés tubulaires dont le bout d'extrémité d'un premier profilé doit être rendu solidaire de la périphérie d'un second profilé, on ménage, au niveau de la périphérie de ce dernier, un orifice de section ajustée au passage du bout d'extrémité du premier profilé tubulaire ;
- on engage dans la partie interne du second profilé et au moins au droit de l'orifice un embout d'assemblage de section externe ajustée à la section interne du second profilé de manière à constituer une butée limitant l'engagement du bout d'extrémité du premier profilé tubulaire dans ledit orifice ;
- l'on vient chemiser l'embout d'assemblage au moins dans sa zone se situant au droit de l'orifice et, sensiblement, sur les pourtours de ce dernier d'un métal d'apport pour, d'une part, assurer la liaison dudit embout d'assemblage et du second profilé et, d'autre part, pour permettre, à ce métal d'apport de s'infiltrer, par capillarité, au moins au niveau de la zone de jonction de ce second profilé tubulaire et du premier profilé tubulaire de manière à les rendre solidaires.

L'invention concerne également un cadre pour bicyclettes ou analogues, issu d'un tel procédé, et comportant, notamment, un tube horizontal supérieur 2, un tube diagonal 3, ces deux étant reliés par un tube de direction 4, un tube de selle 5 rejoignant l'extrémité inférieure du tube diagonal 3 au niveau d'un boîtier de pédaliers 6, une paire de bases arrières 7 et des haubans arrières 9, caractérisé par le fait que dans le tube de direction 4, dans le boîtier de pédaliers 6 et dans la partie supérieure du tube de selle 5 est inséré un embout d'assemblage 13 constituant, respectivement, la douille de direction, la douille de pédaliers et la douille recevant la tige de selle comportant le ou les usinages 16, 17 nécessaires à la réception de pièces de guidage et de roulement pour, respectivement, l'axe de direction, l'axe du pédalier et la tige de selle.

Les avantages qui résultent de la présente invention consistent, essentiellement, en ce que le cadre de cycle, issu d'un tel procédé mettant en oeuvre la technique de soudobrasage, est d'une parfaite homogénéité en ce qui concerne les caractéristiques mécaniques dans la mesure où, chacune des parties de ce cadre a subi, simultanément, un même traitement thermique. En outre, la mise en oeuvre du procédé selon l'invention évite les multiples opérations de reprise ultérieures du type ébavurage et autres, car elle permet de maîtriser, d'une manière précise, la quantité de métal d'apport intervenant au niveau d'une jonction, sans compter que le procédé permettant une diffusion par capillarité de ce métal d'apport à hauteur de ces zones de jonction, évite tout phénomène de reflux et, donc, les coulures éventuelles.

D'autres buts et avantages de la présente invention apparaîtront au cours de la description qui va suivre se rapportant à un mode de réalisation qui n'est donné qu'à titre d'exemple.

La compréhension de cette description sera facilitée en se référant aux dessins joints en annexe et dans lesquels :
- la figure 1 est une représentation schématisée d'un cadre de bicyclette ;
- la figure 2 est une vue schématisée et en coupe partielle du tube de direction auquel sont reliés, respectivement, le tube horizontal supérieur et le tube diagonal ;
- la figure 3 est une vue schématisée du boîtier de pédaliers recevant, respectivement, l'extrémité du tube diagonal, celle du tube de selle ainsi que la paire de base arrière.

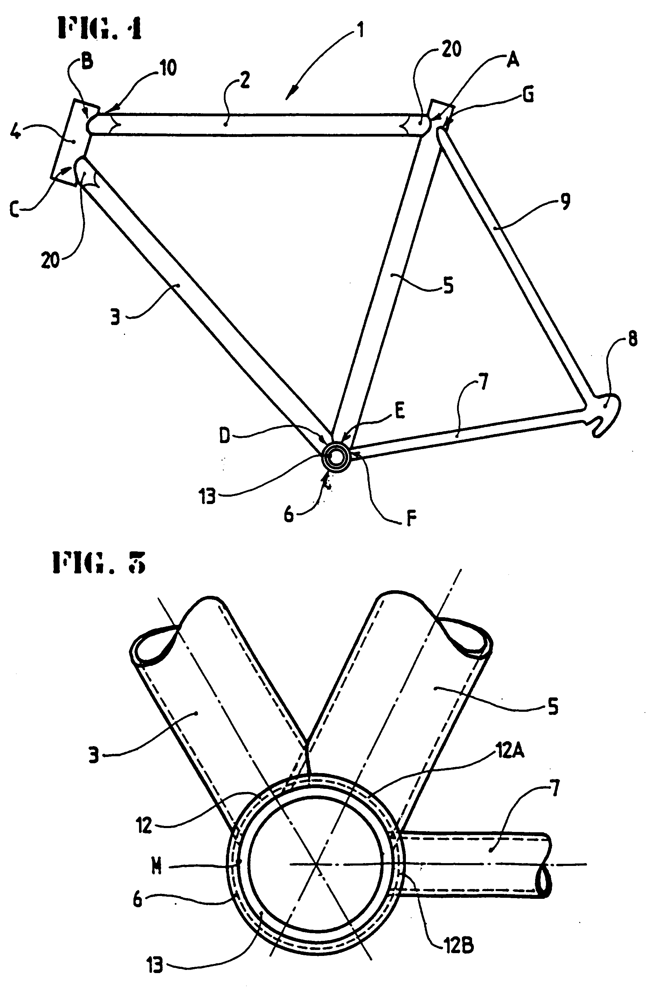

La présente invention concerne, plus particulièrement, un procédé d'assemblage d'une structure en profilé tubulaire, notamment d'un cadre 1 de bicyclette ou analogue dont un exemple de réalisation est illustré dans la figure 1.

En fait, un tel cadre 1 de bicyclette est constitué, essentiellement, par un tube horizontal supérieur 2, un tube diagonal 3, ces deux étant reliés par un tube de direction 4, et un tube de selle 5 venant rejoindre l'extrémité inférieure du tube diagonal 3 au niveau d'un boîtier de pédaliers 6. Ce cadre 1 comporte, également, de manière habituelle, une paire de bases arrières 7 reliant le boîtier de pédaliers 6 à des pattes de fixation 8 à même de recevoir l'axe d'une roue arrière. De plus, depuis lesdites pattes de fixation 8 jusqu'à l'extrémité supérieure du tube de selle 5, s'étendent des haubans arrières 9.

Tel que visible sur cette figure 1, l'ensemble de ces profilés tubulaires 2, 3, 4, 5, 6, 7, 8, 9 que compose la structure correspondant au cadre 1 de bicyclette ou analogue, sont rendus solidaires les uns des autres de telle manière qu'un tube est soit monté en bout d'un autre tube et/ou il coopère, à son ou ses extrémités, avec le pourtour d'un autre tube qui s'étend suivant une direction différente.

Le procédé selon l'invention trouve tout son intérêt lorsque les profilés tubulaires composant la structure sont de type métallique et, comme cela est souvent le cas, pour les cadres de bicyclettes, en un alliage léger d'aluminium ou similaire.

En effet, le procédé consiste à faire appel à la technique de soudobrasage. Ainsi, il est prévu :
- de préassembler tout ou partie de la structure, notamment du cadre 1, de manière que les profilés tubulaires 2 à 9 qui la composent soient maintenus en contact les uns par rapport aux autres à hauteur de leur zone de jonction A à G ;
- d'assurer la présence d'un métal d'apport au niveau de cette ou ces zones de jonction A à G ;
- de tremper tout ou partie de ladite structure, ainsi préassemblée et maintenue, dans un bain de sel en température de manière à garantir une diffusion complète du flux à l'intérieur desdits profilés 2 à 9, plus particulièrement au niveau de leur zone de jonction A à G, et provoquer la fusion du métal d'apport destiné à assurer la liaison.

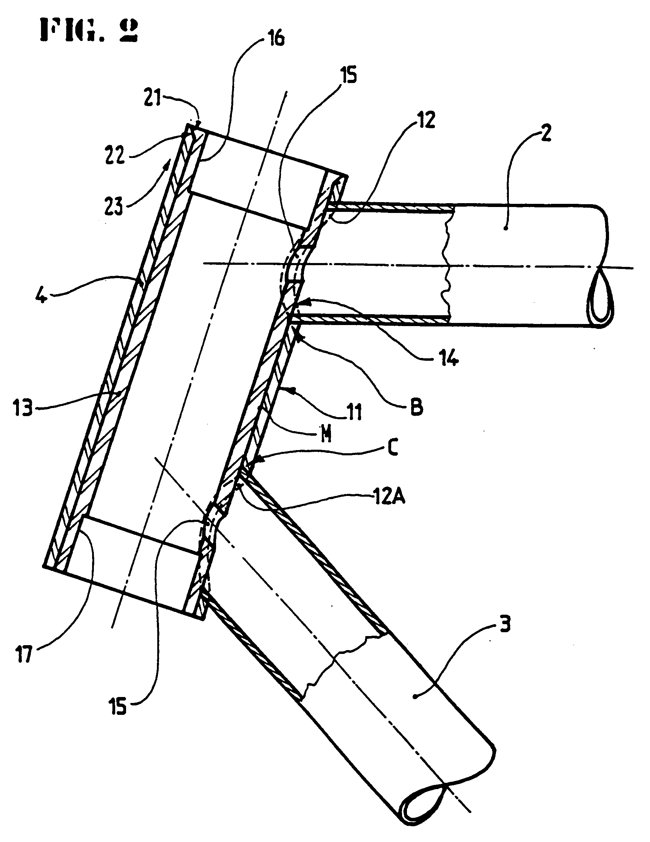

Une première solution pour préassembler deux profilés tubulaires, (par exemple 2 et 4 tels qu'illustrés sur la figure 2), dont le bout d'extrémité 10 d'un premier profilé (dans ce cas le tube horizontal 2), doit être rendu solidaire de la périphérie 11 du second profilé (ici le tube de direction 4), consiste à aménager au niveau de la périphérie 11 de ce dernier, un orifice 12 de section ajustée au passage du bout d'extrémité 10 du premier profilé 2.

Cette solution peut être considérée, en soi, comme suffisante puisqu'elle permet, effectivement, de positionner, les uns par rapport aux autres, les profilés tubulaires 2 à 9 correspondant au cadre 1. Toutefois, dans une telle solution l'on ne maîtrise pas la profondeur d'engagement du bout d'extrémité 10 du premier profilé 2 à l'intérieur du second profilé tubulaire 4 au travers de l'orifice 12.

Aussi, il a été imaginé, selon l'invention, d'engager, dans le second profilé 4 un embout d'assemblage 13 à même de se positionner au moins au droit de l'orifice 12 et dont la section externe est ajustée à la section interne dudit second profilé 4.

De la sorte, cet embout d'assemblage 13 vient définir, avec les parois périphériques de l'orifice 12, un logement 14 dans le fond duquel peut être repoussé, en butée, le bout d'extrémité 10 du premier profilé tubulaire 2.

Avantageusement, cet embout d'assemblage 13 est lui-même de type tubulaire de manière à laisser circuler, dans sa partie interne, le flux du bain de sel lequel peut, ainsi, venir réchauffer les profilés à hauteur de leur zone de jonction A à G. Dans ce même but, ledit embout d'assemblage 13 peut comporter, sur sa périphérie, une ouverture 15 de section plus réduite par rapport à l'orifice 12 et venant se situer au droit de ce dernier de sorte que le flux du bain de sel puisse pénétrer à l'intérieur du premier profilé 2 précisément au niveau de la zone de jonction B de manière à favoriser la fusion du métal d'apport M. Cette dernière précaution est tout particulièrement utile lorsqu'un profilé, tel que le tube horizontal 2 ou encore le tube diagonal 3, est rendu solidaire, en bout de chacune de ses extrémités, de la périphérie d'un autre tube, dans un cas, le tube de direction 4 et le tube de selle 5 et, dans l'autre cas, ledit tube de direction 4 et le boîtier de pédaliers 6.

Il est encore une particularité de l'invention qui consiste à chemiser l'embout d'assemblage 13 au moins dans sa zone se situant au droit de l'orifice 12 et, sensiblement, sur les pourtours de ce dernier, d'un métal d'apport M. Ainsi, étant donné qu'après préassemblage, le bout d'extrémité 10 du premier profilé 2 est poussé en butée dans le fond du logement 14 et, donc, contre l'embout d'assemblage 13, il est, par là même, maintenu en contact avec le métal d'apport de sorte que, lors de la fusion de ce dernier, il se produira la liaison :
- entre l'embout d'assemblage 13 et le bout d'extrémité 10 du premier profilé 2 ;
- entre l'embout d'assemblage 13 et le second profilé 4 ;
- entre le premier profilé 2 et les parois délimitant l'orifice 12 du second profilé 4 en raison de l'infiltration par capillarité du métal d'apport en fusion dans cette zone.

Du même coup, l'on observe que l'on a résolu le problème de la forme complexe du clinquant constituant le métal d'apport tel que cela fut prévu dans la solution précédemment exposée.

Bien évidemment, l'on peut envisager de chemiser, totalement, l'embout d'assemblage 13, tout particulièrement lorsque celui-ci prend position à l'intérieur du tube de direction 4 ou dans le boîtier de pédaliers 6. Ceux-ci comportent, en effet, plusieurs orifices 12; 12A, 12B, au droit desquels peut être positionné un embout d'assemblage 13 en une seule pièce.

De plus, l'embout d'assemblage 13, inséré dans le tube de direction 4 et celui engagé dans le boîtier de pédaliers 6 et tube de selle, peuvent remplir la fonction, respectivement, de douille de direction, de douille de pédaliers et douille de selle. Ainsi, il peuvent présenter tous les usinages 16 et 17 nécessaires à la réception de pièces de guidage et de roulement pour l'axe de direction, l'axe du pédalier et la tige de selle.

Il s'agit, là, bien évidemment, d'avantages considérables puisque l'on vient limiter, d'autant, le nombre des opérations d'assemblage pour le montage d'une bicyclette par exemple.

Il convient d'observer que, tel qu'illustré dans la figure 2, l'embout d'assemblage 13 peut comporter des moyens de positionnement 21 destinés à coopérer avec des moyens complémentaires 22 correspondant au tube 4 qu'il équipe pour assurer son positionnement convenable axialement et/ou angulairement à l'intérieur de ce dernier.

Ainsi, ces moyens de positionnement 22 peuvent se présenter, selon un exemple de réalisation parmi d'autres, sous forme d'un rebord, notamment tronconique, équipant l'une des extrémités 23 de l'embout d'assemblage 13, ce rebord coopérant avec une surface d'appui de forme conjuguée sur ledit tube 4. Ce rebord peut encore présenter un ergot ou autre moyen d'indexation de son positionnement angulaire sur ladite surface d'appui.

Tel qu'illustré dans la figure 1, sur les différents profilés tubulaires 2 à 9 peuvent être engagés des embouts 20 ayant une fonction décorative ou permettant d'améliorer la rigidité de ces profilés tubulaires au niveau de leurs jonctions. Bien entendu, ces embouts 20 peuvent être rendus solidaires de ces extrémités desdits profilés tubulaires d'une manière analogue à la solution mise en oeuvre pour relier un embout d'assemblage 13 à l'intérieur d'un tel profilé tubulaire. Ainsi, l'on peut chemiser les extrémités, par exemple, du tube horizontal 3 d'un métal d'apport avant d'emmancher les embouts 20. Toutefois, l'on observera que, là encore, la liaison peut être obtenue par capillarité et infiltration du métal en fusion entre les embouts 20 et le profilé tubulaire sur lequel ils sont montés, tout particulièrement, au niveau de la zone de contact de ces embouts 20 avec la périphérie de l'autre profilé tubulaire s'étendant suivant une direction différente.

De la même manière, l'on peut prévoir, selon le procédé, d'implanter des renforts à l'intérieur des profilés tubulaires 2 à 9 dont la liaison est obtenue par fusion d'un métal d'apport disposé au niveau des zones de jonction de ces renforts avec le ou les profilés tubulaires dans lesquels ils sont placés.

En finalité, le procédé selon la présente invention remédie à l'ensemble des inconvénients découlant d'un procédé d'assemblage du type soudure ou brasage. En effet, une fois le cadre 1 préassemblé, il est noyé, dans son intégralité, dans le bain de sel et, par conséquent, élevé à une même température. A l'issue de cette opération, ce cadre peut être refroidi brutalement de manière à lui faire subir une opération de trempe totale, il en résulte une homogénéité au niveau des caractéristiques mécaniques s'étendant le long de chacun des profilés tubulaires, y compris au niveau de leurs jonctions. Un traitement supplémentaire de durcissage en fonction du besoin est appliqué.

Par rapport au collage, l'on résout le problème du temps de séchage, puisque, après immersion du cadre 1 dans le bain de sel, la liaison entre les profilés tubulaires est immédiate. De plus, contrairement au collage, l'on s'affranchit, ici, de l'usage de raccords mécanosoudés ou obtenus par un quelconque autre procédé tel que le moulage ou analogue.

Par conséquent, la présente invention présente bon nombre d'avantages qui font qu'elle représente un progrès important dans le domaine technique considéré.

## Revendications

1. Procédé d'assemblage d'une structure en profilés tubulaires, plus particulièrement d'un cadre (1) de bicyclette ou analogue, lesdits profilés tubulaires (2 à 9) étant du type métallique, notamment en alliage d'aluminium ou similaire, consistant, d'une part, à préassembler tout ou partie de ladite structure de sorte que les profilés tubulaires (2 à 9) soient maintenus en contact à hauteur de leur zone de jonction (A à G) au niveau de laquelle l'on assure la présence d'un métal d'apport (M) et, d'autre part, à tremper ladite structure (1) dans un bain de sel en température, pour assurer la fusion du métal d'apport (M) et la liaison entre lesdits profilés tubulaires (2 à 9) préassemblés, caractérisé par le fait que :
- pour préassembler deux profilés tubulaires (2, 4) dont le bout d'extrémité (10) d'un premier profilé (2) doit être rendu solidaire de la périphérie (11) d'un second profilé (4), on ménage, au niveau de la périphérie (11) de ce dernier, un orifice (12) de section ajustée au passage du bout d'extrémité (10) du premier profilé tubulaire (2) ;
- on engage dans la partie interne du second profilé (4) et au moins au droit de l'orifice (12) un embout d'assemblage (13) de section externe ajustée à la section interne du second profilé (4) de manière à constituer une butée limitant l'engagement du bout d'extrémité (10) du premier profilé tubulaire (2) dans ledit orifice (12) ;
- l'on vient chemiser l'embout d'assemblage (13) au moins dans sa zone se situant au droit de l'orifice (12) et, sensiblement, sur les pourtours de ce dernier d'un métal d'apport (M) pour, d'une part, assurer la liaison dudit embout d'assemblage (13) et du second profilé (4) et, d'autre part, pour permettre, à ce métal d'apport (M) de s'infiltrer, par capillarité, au moins au niveau de la zone de jonction (B) de ce second profilé tubulaire (4) et du premier profilé tubulaire (2) de manière à les rendre solidaires.

2. Procédé selon la revendication 1, caractérisé par le fait que l'embout d'assemblage (13) est choisi de type tubulaire laissant circuler, dans sa partie interne, le flux du bain de sel.

3. Procédé selon la revendication 2, caractérisé par le fait que l'embout d'assemblage (13), de forme tubulaire, comporte, sur sa périphérie, une ouverture (15) de section plus réduite par rapport à l'orifice (12) et venant se situer au droit de ce dernier autorisant le liquide du bain de sel à pénétrer à l'intérieur du premier profilé tubulaire (2) , plus particulièrement au niveau de la zone de jonction (B).

4. Procédé selon l'une quelconque des revendications 1 à 3, caractérisé par le fait qu'avant ou après assemblage l'embout d'assemblage (13) est usiné permettant la réception de pièces de guidage, de roulement ou analogue.

5. Procédé d'assemblage selon l'une quelconque des revendications précédentes, caractérisé par le fait que sur le ou les profilés tubulaires (2 à 5), l'on vient engager, en cours de préassemblage de la structure (1), des embouts (20) rendus solidaires du ou des profilés tubulaires (2 à 5) par fusion d'un métal d'apport au cours de l'opération de trempe dans un bain de sel en température.

6. Procédé d'assemblage selon l'une quelconque des revendications précédentes, caractérisé par le fait qu'au cours du préassemblage de la structure, l'on implante des renforts à l'intérieur des profilés (2 à 5) dont la liaison est obtenue par fusion d'un métal d'apport disposé au niveau des zones de jonction de ces renforts avec le ou les profilés tubulaires dans lesquels ils sont placés.

7. Cadre (1) pour bicyclettes ou analogues, issu d'un procédé d'assemblage selon l'une quelconque des revendications 1 à 6 et comportant, notamment, un tube horizontal supérieur (2), un tube diagonal (3), ces deux étant reliés par un tube de direction (4), un tube de selle (5) rejoignant l'extrémité inférieure du tube diagonal (3) au niveau d'un boîtier de pédaliers (6), une paire de bases arrières (7) et des haubans arrières (9), caractérisé par le fait que dans le tube de direction (4), dans le boîtier de pédaliers (6) et dans la partie supérieure du tube de selle (5) est inséré un embout d'assemblage (13) constituant, respectivement, la douille de direction, la douille de pédaliers et la douille recevant la tige de selle comportant le ou les usinages (16, 17) nécessaires à la réception de pièces de guidage et de roulement pour, respectivement, l'axe de direction, l'axe du pédalier et la tige de selle.

8. Cadre (1) pour bicyclettes ou analogues selon la revendication 7, caractérisé par le fait que l'embout d'assemblage (13) comporte des moyens de positionnement (21) à même de coopérer avec des moyens complémentaires (22) correspondant au tube (4) qu'il équipe pour assurer son positionnement axial et/ou angulaire à l'intérieur de ce dernier.

## Claims

1. Process for assembling a tubular-profile structure, in particular a bicycle frame (1) or the like, said tubular profiles (2 - 9) being of a metallic type, viz. of an aluminium alloy or similar, consisting, on the one hand, in pre-assembling the whole or part of said structure so that the tubular profiles (2 - 9) are maintained into contact at the level of their joining area (A - G) at the level of which is ensured the presence of a filler metal (M) and, on the other hand, in dipping said structure (1) into a hot salt bath, in order to ensure the fusion of the filler metal (M) and the connection between said pre-assembled tubular profiles (2 - 9), characterised in that :
- for pre-assembling two tubular profiles (2, 4) the extreme end (10) of a first profile (2) of which has to be made integral with the periphery (11) of a second profile (4), at the level of the periphery (11) of this latter is provided for a hole (12) with a cross-section adjusted to the passing through of the extreme end (10) of the first tubular profile (2) ;
- into the internal portion of the second profile (4) and at least in front of the hole (12) is inserted an assembling ferrule (13) with an external cross-section adjusted to the internal cross-section of the second profile (4), so as to form a thrust limiting the insertion of the extreme end (10) of the first tubular profile (2) into said hole (12);
- the assembling ferrule (13) is coated, at least on its area located in front of the hole (12) and substantially on the peripheries of this latter, with a filler metal (M), in order to, on the one hand, ensure the connection of said assembling ferrule (13) and the second profile (4) and, on the other hand, allow this filler metal (M) to infiltrate, through capillarity, at least at the level of the joining area (B) of this second tubular profile (4) and of the first tubular profile (2), so as to make them integral.

2. Process according to claim 1, characterised in that the assembling ferrule (13) is chosen of the tubular type which lets the salt-bath flow circulate in its internal portion.

3. Process according to claim 2, characterised in that the tubularly shaped assembling ferrule (13) includes, at its periphery, an opening (15) with a cross-section smaller than the hole (12) and located in front of this latter, allowing the liquid of the salt bath to penetrate into the first tubular profile (2), in particular at the level of its joining area (B).

4. Process according to any of claims 1 to 3, characterised in that prior to or after the assembling the assembling ferrule (13) is machined to allow it to receive guiding, rolling parts or the like.

5. Process for assembling according to any of the preceding claims, characterised in that onto the tubular profile or profiles (2 - 5) are inserted, during the pre-assembling of the structure (1), ferrules (20) made integral with the tubular profile or profiles (2 - 5) through melting of a filler metal during the operation of dipping into a hot salt bath.

6. Process for assembling according to any of the preceding claims, characterised in that during the pre-assembling of the structure reinforcements are implanted into the profiles (2 - 5) the connection of which is achieved through melting of a filler metal arranged at the level of the joining areas of these reinforcements with the tubular profile or profiles in which they are placed.

7. Bicycle frame (1) or the like achieved through a process for assembling according to any of claims 1 to 6 and including viz. an upper horizontal tube (2), a diagonal tube (3), both of them being connected to each other by a steering tube (4), a saddle tube (5) joining the lower end of the diagonal tube (3) at the level of a pedal-block casing (6), a pair of rear bases (7) and rear stays (9), characterised in that into the steering tube (4), into the pedal-block casing (6) and into the upper portion of the saddle tube (5) is inserted an assembling ferrule (13) forming, respectively, the steering bushing, the pedal-block bushing and the bushing receiving the stem of the saddle including the machining or machinings (16, 17) necessary for receiving the guiding and rolling parts for, respectively, the steering spindle, the pedal-block spindle and the stem of the saddle.

8. Bicycle frame (1) or the like according to claim 7, characterised in that the assembling ferrule (13) includes positioning means (21) capable of co-operating with complementary means (22) corresponding to the tube (4) which is provided with it, in order to ensure its axial and/or angular positioning inside this latter.

## Patentansprüche

1. Verfahren zum Zusammenbauen einer Rohrprofilstruktur, insbesondere eines Fahrradrahmens (1) oder dergleichen, wobei die genannten Rohrprofileisen (2 - 9) metallischer Art, nämlich aus Aluminiumlegierung oder dergleichen, sind, das darin besteht, einerseits, die genannte Struktur im Ganzen oder zum Teil so vorzuverbinden, daß die Rohrprofileisen (2 - 9) im Bereich ihrer Verbindungszone (A - G), im Bereich deren die Anwesenheit eines Zusatzmetalls (M) gewährleistet ist, in Berührung gehalten werden, und, andererseits, die genannte Struktur (1) in ein heißes Salzbad zu tauchen, um das Schmelzen des Zusatzmetalls (M) und die Verbindung zwischen den genannten vorverbundenen Rohrprofileisen (2 - 9) zu sichern, dadurch gekennzeichnet, daß :
- zum Vorverbinden zweier Rohrprofileisen (2, 4), von denen das äußere Ende (10) eines ersten Profileisens (2) fest mit dem Umkreis (11) eines zweiten Profileisens (4) zu verbinden ist, im Bereich des Umkreises (11) dieses letzten ein Loch (12) eines der Durchführung des äußeren Endes (10) des ersten Profileisens (2) angepaßten Querschnitts vorgesehen ist;
- in den inneren Teil des zweiten Profileisens (4) und wenigstens gegenüber dem Loch (12) eine Verbindungszwinge (13) eines dem inneren Querschnitt des zweiten Profileisens (4) angepaßten äußeren Querschnitts eingeführt wird, sodaß ein Anschlag gebildet wird, der die Einführung des äußeren Endes (10) des ersten Profileisens (2) in das genannte Loch (12) begrenzt ;
- die Verbindungszwinge (13) wenigstens in ihrem sich gegenüber dem Loch (12) befindenden Bereich und im wesentlichen am Umkreis dieses letzten mit einem Zusatzmetall (M) bedeckt wird, um, einerseits, die Verbindung der genannten Verbindungszwinge (13) und des zweiten Profileisens (4) zu sichern und, andererseits, zu erlauben, daß dieses Zusatzmetall (M) durch Kapillarität wenigstens im Bereich der Verbindungszone (B) dieses zweiten Rohrprofileisens (4) und des ersten Rohrprofileisens (2) eindringt, sodaß sie fest miteinander verbunden werden.

2. Verfahren nach Anspruch 1, dadurch gekennzeichnet, daß die Verbindungszwinge (13) der rohrförmigen Art gewählt wird, wobei sie in ihrem inneren Teil den Salzbadfluß durchströmen läßt.

3. Verfahren nach Anspruch 2, dadurch gekennzeichnet, daß die rohrförmige Verbindungszwinge (13) an ihrem Umkreis eine Öffnung (15) eines kleineren Querschnitts als das Loch (12) umfaßt, die sich gegenüber diesem letzten befindet und es die Flüssigkeit des Salzbades erlaubt, in das erste Rohrprofileisen (2), insbesondere im Bereich dessen Verbindungszone (B), einzudringen.

4. Verfahren nach irgendeinem der Ansprüche 1 bis 3, dadurch gekennzeichnet, daß vor oder nach dem Zusammenbau die Verbindungszwinge (13) verarbeitet wird, um zu erlauben, die Führungs-, Rollteile oder dergleichen aufzunehmen.

5. Verfahren nach irgendeinem der vorgehenden Ansprüche, dadurch gekennzeichnet, daß während der Vorverbindung der Struktur (1) auf die Rohrprofile (2 - 5) Zwingen (20) aufgesteckt werden, die durch Schmelzung eines Zusatzmetalls während dem Vorgang des Eintauchens in ein heißes Salzbad fest mit dem bzw. den Rohrprofileisen (2 - 5) verbunden werden.

6. Verfahren zum Zusammenbauen nach irgendeinem der vorgehenden Ansprüche, dadurch gekennzeichnet, daß während der Vorverbindung der Struktur Verstärkungen innerhalb der Profileisen (2 - 5) angebracht werden, deren Verbindung durch Schmelzung eines im Bereich der Verbindungszonen dieser Verstärkungen mit dem bzw. den Rohrprofileisen, in denen sie angebracht werden, erreicht wird.

7. Fahrradrahmen (1) oder dergleichen entstehend aus einem Verfahren zum Zusammenbauen nach irgendeinem der Ansprüche 1 bis 6 und umfassend nämlich ein oberes, waagerechtes Rohr (2), ein diagonales Rohr (3), wobei diese beiden über ein Lenkrohr (4), ein Sattelrohr (5), das an das untere Ende des diagonalen Rohres (3) im Bereich eines Pedalenblockgehäuses (6) anschließt, ein Paar hintere Basisrohre (7) und hintere Schrägrohre (9) mit einander verbunden sind, dadurch gekennzeichnet, daß in das Lenkrohr (4), in das Pedalenblockgehäuse (6) und in den oberen Teil des Sattelrohres (5) jeweils eine Verbindungszwinge (13) eingefügt wird, die respektive die Gelenkbüchse, die Pedalenblockbüchse und die Büchse bildet, die die Sattelstange aufnimmt, die die erforderliche(n) Verarbeitung bzw. Verarbeitungen (16, 17) zum Aufnehmen der Führungs- und der Rollteile respektive für die Gelenkachse, die Pedalenblockachse und die Sattelstange umfaßt.

8. Fahrradrahmen (1) oder dergleichen nach Anspruch 7, dadurch gekennzeichnet, daß die Verbindungszwinge (13) Positionierungsmittel (21) umfaßt, die geeignet sind, mit ergänzenden, dem Rohr (4), das damit versehen ist, entsprechenden Mitteln (22) zusammenzuwirken, um ihre Axial- und/oder Winkelpositionierung innerhalb dieses letzten zu sichern.
